Europäisches Patentamt

European Patent Office

Office européen des brevets

(11) Publication number: **0 055 106**
A1

# EUROPEAN PATENT APPLICATION

(21) Application number: 81305973.0

(22) Date of filing: 21.12.81

(51) Int. Cl.³: **F 16 B 39/26**

(30) Priority: 19.12.80 GB 8040862
12.03.81 GB 8107780

(43) Date of publication of application: 30.06.82
Bulletin 82/26

(84) Designated Contracting States: **CH DE FR GB IT LI**

(71) Applicant: **CLAMASON INDUSTRIES LIMITED, High Street, Pensnett Staffordshire (GB)**

(72) Inventor: **Clarke, Gerald Michael Richard, 71 Park Road Hagley, Near Stourbridge Worcestershire (GB)**

(74) Representative: **Russell, Paul Sidney et al, Barker, Brettell & Duncan 138 Hagley Road Edgbaston, Birmingham B16 9PW (GB)**

(54) Screw-threaded fasteners.

(57) Components (18, 20) can be secured together by means of a headed fastener comprising a threaded shank (14) and a locking portion in the form of a flared skirt (16) which depends from the shank root. One of the components (18) comprises a recess (24) into which the head can be received. Upon insertion of the fastener the skirt becomes expanded against a bottom wall (28) of the recess to engage a peripheral wall (30) of the recess to resist accidental unscrewing. The skirt becomes compressed between an undersurface (13) of the head and the bottom wall. The skirt may be of increasing thickness from the shank root to the skirt periphery.

1

## SCREW-THREADED FASTENERS

This invention is concerned with a self-locking headed screw-threaded fastener adapted for use in securing together two or more components of which one comprises a recess into which a head of the fastener will be recived upon insertion of the fastener, the fastener comprising a shank which depends from the head and which is screw-threaded along part at least of its length and a locking portion in the form of a flared skirt, whereby upon insertion of the fastener the skirt can be expanded against a bottom wall bounding the recess to engage a peripheral wall bounding the recess to resist accidental unscrewing of the fastener.

By the term "self-locking" is meant, where used herein, that a fastener comprises means provided specifically for the purpose of resisting unscrewing of the fastener, after insertion, to guard against the fastener working loose owing to vibrations or other causes. The fastener may be, for example, a machine screw or bolt.

There are described in United Kingdom patent specification No. 381 718 various self-locking threaded fasteners (both nuts and bolts) which comprise a flared flange or skirt, of uniform thickness, which depends from the periphery of a nut or, in similar manner, the head of a bolt. The skirt is arranged to be expanded by a force applied axially to the skirt periphery in application of the fastener, and is provided with a view to its being expanded to enter a groove in the peripheral wall of a recess in which that portion of the fastener comprising the skirt is to be received; as the fastener advances, the skirt firstly engages a bottom wall of the recess and thereafter, owing to its engagement with the bottom wall, is lifted (and so increases in diameter)

0055106

2

until a peripheral portion of the skirt enters the groove. As described, the groove may be preformed or it may be cut out by the rotating skirt as the skirt expands. To unscrew the fastener, sufficient force must be applied to deform the skirt periphery and pull it out of the groove.

It is an object of the present invention to provide an improved self-locking headed screw-threaded fastener for use in circumstances in which the head of the fastener is to be received into a recess in a body into which the fastener is to be inserted, the recess being of a diameter not very much greater than the diameter of the head.

In one of its aspects the invention is characterised in that the skirt depends from a position at or adjacent the root of the shank to be engaged by an undersurface of the head when the fastener is fully inserted.

It is to be noticed that for a given angular deflection of a skirt in expansion, the radial displacement of the skirt periphery is dependent on the skirt length (as measured over the skirt surface, not axially). That is to say, the greater the skirt length the greater the radial movement of the skirt periphery. By providing a skirt which depends substantially from the shank root, rather than from the periphery of the head, skirt length is maximised for a given recess diameter and a greater degree of interference with the peripheral wall, in the expanded condition of the skirt, can be achieved. Conversely, for a given required degree of interference, the recess diameter can be minimised, which can be particularly important in certain circumstances.

We have found that with a fastener in accordance with the invention, it can be unnecessary for any groove to be provided in the peripheral wall of the recess, frictional forces between the skirt periphery and the recess wall being adequate of themselves to resist working loose of the fastener. In one preferred form of the fastener, the skirt is of increasing thickness from a position adjacent the shank root to a peripheral portion of the skirt, and this can be of benefit in two ways. Firstly, it is possible to provide a peripheral surface on the skirt which has a relatively large surface area to engage the recess wall, without rendering the skirt very stiff. Secondly, in expansion of the skirt there tends to occur a rotation of the skirt (as viewed in section) about the shank root, rather than a bending of the skirt all the way along its length into a curved form. This can be of advantage as regards control of the attitude of the skirt periphery, which may be important in maximising interference between the skirt and the recess wall in the applied fastener. Preferably the periphery of the skirt presents a cylindrical surface which is returned to a substantially cylindrical form, engaging the recess wall, when the fastener is fully inserted.

In another of its aspects the invention is characterised in that the skirt is of increasing thickness from a position adjacent the shank root to a peripheral portion of the skirt.

Preferably the skirt depends from a position at or adjacent the shank root.

There now follows a detailed description, to be read with reference to the accompanying drawings, of two fasteners and their use which illustrate the invention by way of example.

In the accompanying drawings:-

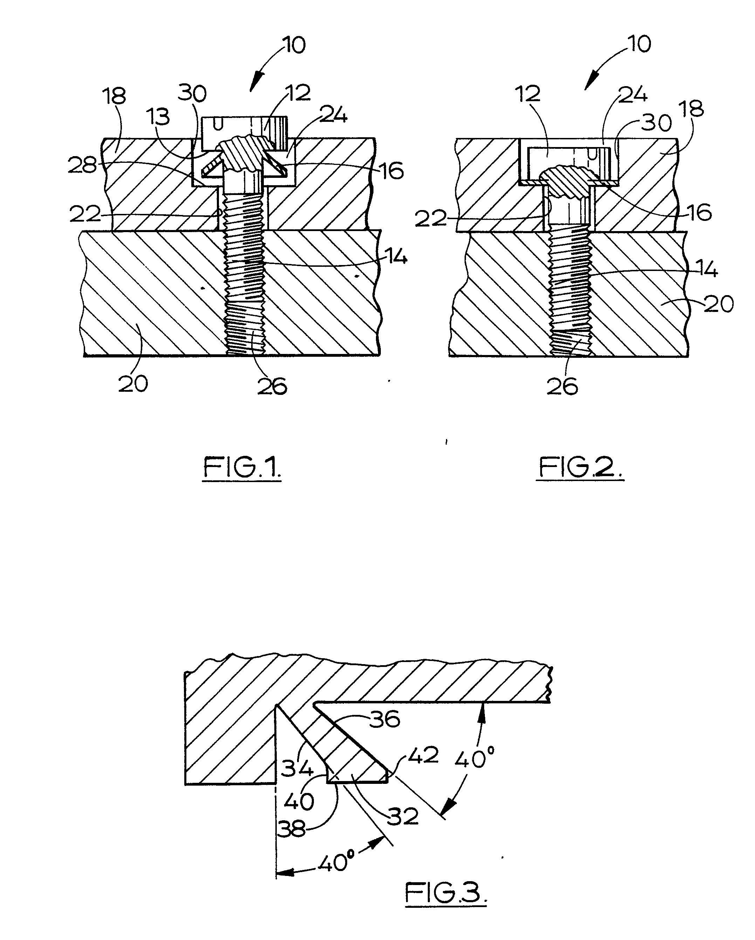

<u>Figure 1</u> illustrates a preliminary stage in insertion of the first fastener;

<u>Figure 2</u> illustrates the first fastener fully inserted;

<u>Figure 3</u> shows the skirt form of the second fastener; and

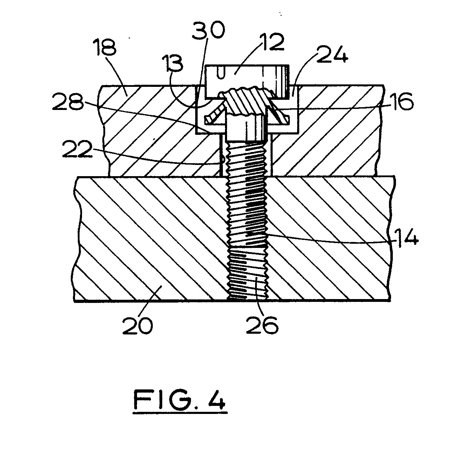

<u>Figure 4</u> illustrates insertion of the second fastener.

The first fastener 10 (Figures 1 and 2) is a self-locking headed screw-threaded fastener in the form of a machine screw. The fastener comprises a head 12, of cheese-head form, and a shank 14 depending from the head 12 and being threaded along part of its length.

The fastener 10 comprises a locking portion arranged beneath the head 12 and in the form of a flared skirt 16 which depends from the root of the shank where the shank meets an annular undersurface 13 of the head. The skirt is of frusto-conical form with an apical angle of 90° and has a maximum diameter equal to that of the head 12.

The fastener 10 is formed in one piece and is of mild steel.

Figures 1 and 2 illustrate use of the first fastener to secure together two components 18 and 20. The component 18 comprises a clearance bore 22 and a recess 24, formed by counterboring the bore 22, of a diameter approximately 10% greater than that of the head 12 and the skirt 16 of the fastener. The component 20 comprises a tapped bore 26 into which the shank 14 of the fastener can be threaded.

To secure together the two components, the fastener is inserted through the bore 22 and into the bore 26 in a conventional manner. As the fastener is inserted, the skirt 16 eventually engages an annular bottom surface 28 of the recess 24. As the fastener is further screwed down, a force is applied, axially of the shank, to expand the skirt against the surface 28. In this way the diameter of the skirt is increased and the skirt is caused to engage the peripheral wall 30 of the recess 24. The skirt assumes the form of a substantially flat annular flange when the fastener is fully inserted (Figure 2), the flange being engaged by the annular undersurface 13 of the head 12 and compressed between the undersurface and the bottom surface 28 of the recess.

The engagement between the skirt 16 and the peripheral wall 24 greatly increases the frictional resistance to rotation of the fastener, and accordingly serves to resist any tendency for the fastener to work loose owing to vibrations or other causes.

It is to be understood that in other embodiments of the invention the fastener could be made of any suitable metal, or other, material and the locking portion could take any of a variety of forms. For most applications it will not be essential that the diameter of the unexpanded locking portion be the same as that of the head of the fastener.

The skirt 16 of the fastener shown in Figure 1 is of constant thickness between a position adjacent the shank root and a peripheral portion of the skirt which presents a cylindrical, radially-outwardly-facing, peripheral face. An alternative skirt form which has been found preferable for certain sizes and materials, to give an improved self-locking performance in use, is displayed by the second fastener, shown in Figure 3. In this alternative form, the skirt is of increasing thickness from a position adjacent the shank root to a peripheral portion 32.

The skirt of the second fastener is of a generally frusto-conical form with a mean apical angle of 90°, but the conical form of an outer surface 34 of the skirt has an apical angle of approximately 100° and that of an inner surface 36 has an apical angle of approximately 80°. The peripheral portion 32 provides a cylindrical radially-outwardly-facing peripheral face 38, a flat outer annular face 40 and an inner annular face 42, the outer and inner annular faces lying in planes perpendicular to the fastener axis and extending between the peripheral face 38 and the outer and inner surfaces 34 and 36 respectively. The diameter of the cylindrical face 38 is equal to that of the fastener head.

In use of the second fastener (Figure 4), the inner annular face 42 is the first part of the skirt to engage the bottom of the recess. As the fastener is further screwed down, the skirt is compressed axially with the result at first that there is a rotation of the peripheral portion 32 (viewing the skirt in section, as in Figures 3 and 4) so that the peripheral face 38 adopts a frusto-conical form, of increasing apical angle with further compression; the tendency of the skirt to bend is greater adjacent the shank root than elsewhere, the effect being heightened by the increase in skirt thickness with radius. However, once the skirt periphery has engaged the peripheral wall of the recess further compression of the skirt will result in a reversal of the
aforementioned rotation, and when the fastener is fully
inserted the peripheral face 38 of the skirt will have
returned to a substantially cylindrical form to engage
the cylindrical recess wall 30 over at least a substantial proportion of the area of the face.

The skirt 16 of the fastener shown in Figure 1
presents a circular, relatively sharp, edge to the
bottom surface of the recess upon insertion of the
fastener. It may be found in some circumstances that
that edge tends to dig into the bottom surface, which
can affect the manner in which the skirt collapses under
compression and may mar the ultimate self-locking performance of the skirt. The inner annular face 42 of the
alternative skirt form (Figure 3) serves to reduce the
likelihood of that difficulty arising, since the face 42
can lie flat against the bottom surface of the recess.

## CLAIMS

1. A self-locking headed screw-threaded fastener adapted for use in securing together two or more components of which one (18) comprises a recess (24) into which a head (12) of the fastener will be received upon insertion of the fastener, the fastener comprising a shank (14) which depends from the head and which is screw-threaded along part at least of its length and a locking portion in the form of a flared skirt (16), whereby upon insertion of the fastener the skirt can be expanded against a bottom wall (28) bounding the recess to engage a peripheral wall (30) bounding the recess to resist accidental unscrewing of the fastener, characterised in that the skirt depends from a position at or adjacent the root of the shank to be engaged by an undersurface (13) of the head when the fastener is fully inserted.

2. A fastener according to Claim 1 characterised in that the skirt (16) is of increasing thickness from a position adjacent the shank root to a peripheral portion (32) of the skirt.

3. A fastener according to Claim 2 characterised in that the peripheral portion of the skirt presents a cylindrical radially-outwardly-facing peripheral surface (38).

4. A fastener according to either of Claims 2 and 3 characterised in that the peripheral portion (32) of the skirt presents a flat annular face (42) facing away from the head and lying in a plane perpendicular to the fastener axis.

5.   An assembly of two or more components secured together by means of a self-locking headed screw-threaded fastener, the fastener comprising a shank (14) which depends from the head (12) and which is screw-threaded along part at least of its length and a locking portion in the form of an annular flange (16), the head of the fastener being received in a recess (24) in one of the components and the periphery of the flange being in engagement with a peripheral wall (30) bounding the recess to resist accidental unscrewing of the fastener, characterised in that the flange (16) depends from a position at or adjacent the root of the shank (14) and is engaged by an undersurface (13) of the head.

6.   A  self-locking  headed  screw-threaded  fastener adapted for use in securing together two or more components of which one (18) comprises a recess (24) into which a head (12) of the fastener will be received upon insertion of the fastener, the fastener comprising a shank (14) which depends from the head and which is screw-threaded along part at least of its length and a locking portion in the form of a flared skirt (16), whereby upon insertion of the fastener the skirt can be expanded against a bottom wall (28) bounding the recess to engage a peripheral wall (30) bounding the recess to resist accidental unscrewing of the fastener, characterised in that the skirt (14) is of increasing thickness from a position adjacent the shank root to a peripheral portion (32) of the skirt.

7.   A fastener according to Claim 6 characterised in that the peripheral portion (32) of the skirt presents a cylindrical radially-outwardly-facing peripheral surface (38).

8. A fastener according to either of Claims 6 and 7 characterised in that the peripheral portion (32) of the skirt presents a·flat annular face (42) facing away from the head and lying in a plane perpendicular to the fastener axis.

9. An assembly of two or more components secured together by means of a self-locking headed screw-threaded fastener, the fastener comprising a shank (14) which depends from the head (12) and which is screw-threaded along part at least of its length and a locking portion in the form of an annular flange (16), the head of the fastener being received in a recess (24) in one of the components and the periphery of the flange being in engagement with a peripheral wall (30) bounding the recess to resist accidental unscrewing of the fastener, characterised in that the flange (16) is of increasing thickness from a position adjacent the shank root to a peripheral portion (32) of the skirt.

10. An assembly according to Claim 9 in which a substantially cylindrical peripheral surface (38) of the flange (16) lies against a cylindrical surface of the peripheral wall (30).

0055106

1/2

FIG.1.

FIG.2.

FIG.3.

FIG. 4

0055106

European Patent Office

EUROPEAN SEARCH REPORT

Application number

EP 81 30 5973.0

| Category | Citation of document with indication, where appropriate, of relevant passages | Relevant to claim |
|---|---|---|
| **DOCUMENTS CONSIDERED TO BE RELEVANT** | | |
| X | DE - C - 370 113 (SVENSKA KULLAGERFA-FABRIKEN) <br> * fig. 1 * | 1,3,4, 7,8 |
| Y | DE - A - 1 400 833 (C.H. HANFLAND) <br> * fig. 3 * | 1,5,6 |
| Y | DE - U - 1 796 007 (SÜDDEUTSCHE KOLBENBOLZENFABRIK) <br> * fig. 1 * | 1,5,6 |
| Y <br> A | FR - A - 722 873 (UNITED AMERICAN BOSCH CORP.) <br> * fig. 2, 3, 7 * <br> * fig. 2, 3, 7 * | 1,5,6 <br> 9,10 |
| Y | GB - A - 2 041 137 (ILLINOIS TOOL WORKS) <br> * fig. 1, 3 * | 1,5 |
| Y | DE - A - 2 226 161 (R. KELLERMANN, FABRIK FÜR GEWINDETEILE) <br> * fig. 1 * | 1-4 |
| Y | DE - A1 - 2 422 094 (L.F. SCHMID) <br> * fig. 4 * | 1-4 |
| Y | DE - U1 - 7 601 263 (HSU) <br> * page 7, paragraph 2; fig. 5 * <br> ./.. | 1 |

**CLASSIFICATION OF THE APPLICATION (Int. Cl. 3)**

F 16 B 39/26

**TECHNICAL FIELDS SEARCHED (Int.Cl. 3)**

F 16 B 39/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 04-03-1982 | ZAPP |

EPO Form 1503.1 06.78

## EUROPEAN SEARCH REPORT

European Patent Office

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| Y | US - A - 1 923 647 (J.F. VERA) <br> * fig. 1 to 5 * <br> ---- | 1 | |
| | | | TECHNICAL FIELDS SEARCHED (Int. Cl.³) |